# EUROPEAN PATENT APPLICATION

(11) **EP 4 692 379 A1**
(43) Date of publication of application: **11.02.2026**
(21) Application number: 25192855.2
(22) Date of filing: 30.07.2025
(51) Int. Cl.: C21D 1/30, C21D 1/34, C21D 1/78, C21D 8/12, C21D 9/00, H01F 41/02, H02K 15/02, F27B 5/14, H02K 15/022, H02K 15/0275

(54) **METHOD FOR MANUFACTURING LAMINATED IRON CORE AND HEATING DEVICE**

(30) Priority: 06.08.2024 JP 2024130026
(71) Applicant: Mitsui High-Tec, Inc., Kitakyushu-shi, Fukuoka 807-8588 (JP)
(72) Inventor: HASUO, Yusuke, Kitakyushu-shi, Fukuoka, 8078588 (JP); HATTORI, Sho, Kitakyushu-shi, Fukuoka, 8078588 (JP); NISHITATENO, Masashi, Kitakyushu-shi, Fukuoka, 8078588 (JP)
(74) Representative: Hoefer & Partner Patentanwälte mbB

(57) **Abstract**

A method for manufacturing a laminated iron core includes: arranging N heating units in the laminated iron core such that the N heating units are aligned in a circumferential direction of the laminated iron core, where N is a natural number of two or more; and heating N regions of the laminated iron core that face the N heating units with the N heating units. The heating includes switching operation of the N heating units from one to less than N at a time.

## Description

### TECHNICAL FIELD

The present disclosure relates to a method for manufacturing a laminated iron core and a heating device.

### BACKGROUND ART

Patent Literature 1 discloses a method of annealing an inner peripheral portion of a laminated iron core by heating the laminated iron core with a heater disposed in a through hole extending along a central axis of the laminated iron core.

### CITATION LIST

### PATENT LITERATURE

Patent Literature 1: JP2006-187174A

According to the method of Patent Literature 1, the entire inner peripheral portion of the laminated iron core is heated substantially the same time. Therefore, although the inner peripheral portion tends to thermally expand outward in a radial direction, the thermal expansion of the inner peripheral portion is inhibited because an outer peripheral portion of the laminated iron core is not heated. Therefore, no escape place is secured for deformation due to thermal expansion at the inner peripheral portion, and deformation such as warpage or undulation may occur at the inner peripheral portion in a lamination direction of the laminated iron core. A same phenomenon may occur when the entire outer peripheral portion of the laminated iron core is heated substantially the same time.

### SUMMARY

Therefore, the present disclosure describes a method for manufacturing a laminated iron core and a heating device capable of reducing deformation that occurs in the laminated iron core when the laminated iron core is heated.

An example of a method for manufacturing a laminated iron core includes: arranging N heating units in the laminated iron core such that the N heating units are aligned in a circumferential direction of the laminated iron core, where N is a natural number of two or more; and heating N regions of the laminated iron core that face the N heating units with the N heating units. The heating includes switching operation of the N heating units from one to less than N at a time.

According to the method for manufacturing a laminated iron core and the heating device of the present disclosure, it is possible to reduce deformation that occurs in the laminated iron core when the laminated iron core is heated.

### BRIEF DESCRIPTION OF DRAWINGS

FIG. 1 is a perspective view showing an example of a laminated iron core.
FIG. 2 is a top view showing an example of the laminated iron core in FIG. 1 and a heating device.
FIG. 3 is a sectional view taken along line III-III in FIG. 2.
FIGS. 4A to 4D are top views illustrating an example of a heating timing of the laminated iron core by a heating unit.
FIGS. 5A to 5D are top views illustrating an example of a heating timing of the laminated iron core by the heating unit.
FIG. 6 is a graph showing an example of temperature changes over time at three different locations of the laminated iron core.
FIG. 7A is a graph schematically showing an example of intermittent heating and switching of one heating unit, and FIG. 7B is a graph schematically showing an example of intermittent heating and switching of another heating unit that operates at a timing different from that of the one heating unit.
FIG. 8 is a top view showing another example of the laminated iron core in FIG. 1 and the heating device.
FIGS. 9A to 9D are top views illustrating another example of the heating timing of the laminated iron core by the heating unit.

### DESCRIPTION OF EMBODIMENTS

In the following description, the same elements or elements having the same functions are denoted by the same reference numerals, and redundant description thereof is omitted. In the present description, when referring to "upper", "lower", "right", or "left" in a figure, the direction of the symbol in the figure is used as a reference.

### Configuration of Laminated Iron Core

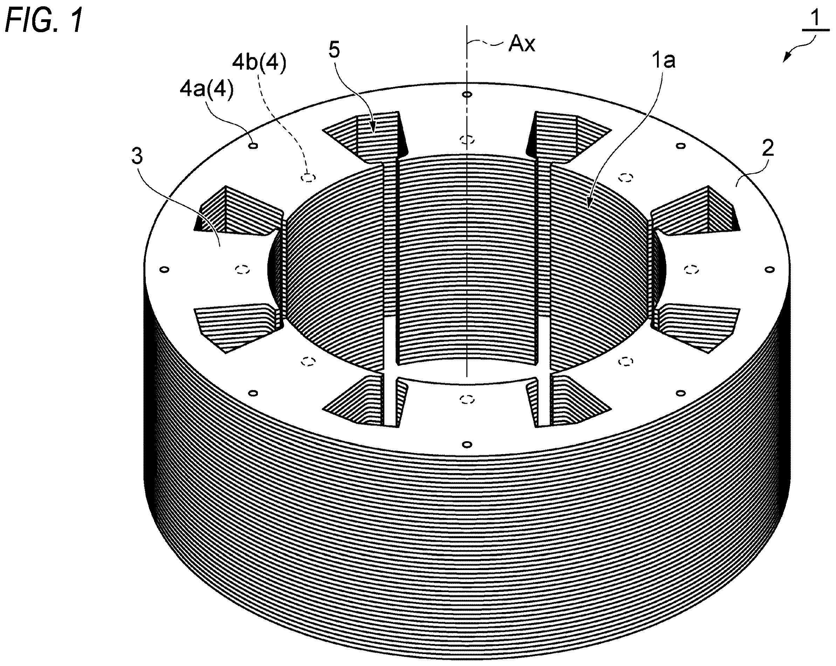

First, a configuration of a laminated iron core 1 will be described with reference to FIG. 1. FIG. 1 illustrates a stator laminated iron core as an example of the laminated iron core 1. The stator laminated iron core is a part of a stator. The stator is obtained by attaching windings to the stator laminated iron core. The stator is combined with a rotor to form a motor.

The laminated iron core 1 has a cylindrical shape as a whole. A central hole 1a penetrating the laminated iron core 1 is provided in a central portion of the laminated iron core 1 so as to extend along a central axis Ax. The central hole 1a extends in a height direction (lamination direction) of the laminated iron core 1. A rotor can be arranged in the central hole 1a.

The laminated iron core 1 is a laminate in which a plurality of punched members W are stacked. The punched members W are, for example, plate-shaped bodies obtained by punching a strip-shaped electromagnetic steel plate (metal plate) into a predetermined shape. The laminated iron core 1 may be formed by performing rotating lamination on the plurality of punched members W. The term "rotating lamination" refers to laminating the plurality of punched members W while shifting an angle between the punched members W relatively. The rotating lamination is performed mainly for a purpose of canceling a plate thickness deviation of the punched members W and increasing flatness, parallelism, and perpendicularity of the stator laminated iron core 1. An angle of the rotating lamination may be set to any magnitude.

The laminated iron core 1 includes a yoke portion 2, a plurality of tooth portions 3, and a plurality of joint portions 4. The yoke portion 2 has an annular shape and extends in a manner of surrounding the central axis Ax. As illustrated in FIG. 1, the yoke portion 2 may have a circular ring shape. The plurality of tooth portions 3 extend along a radial direction of yoke portion 2 from an inner edge of yoke portion 2 toward the central axis Ax. That is, the tooth portions 3 protrude toward the central axis Ax from the inner edge of the yoke portion 2. The plurality of tooth portions 3 may be arranged at substantially equal intervals in a circumferential direction of the yoke portion 2. A slot 5, which is a space for arranging windings (not shown), is provided between adjacent tooth portions 3.

The joint portions 4 may be provided on the yoke portion 2, may be provided on each of the tooth portions 3, or may be provided on both the yoke portion 2 and the tooth portions 3. In the example of FIG. 1, as examples of the joint portions 4, caulkings 4a are provided on the yoke portion 2, and an adhesive 4b is provided on each of the tooth portions 3. Therefore, the punched members W adjacent to each other in the height direction are joined by the caulkings 4a and the adhesives 4b. The yoke portion 2 and each of the tooth portions 3 may be joined together by the caulkings 4a. The yoke portion 2 and each of the tooth portions 3 may be joined together by the adhesives 4b.

### Configuration of Heating Device

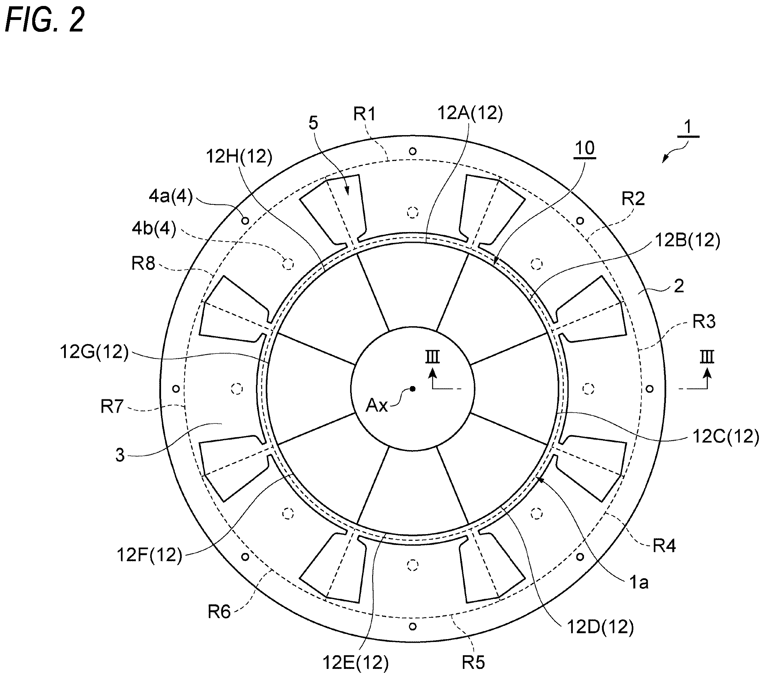

Next, a configuration of a heating device 10 that heats the laminated iron core 1 will be described with reference to FIGS. 2 to 6. The heating device 10 is configured to remove the distortion remaining inside the punched member W by heating the laminated iron core 1 at a predetermined temperature (for example, about 700°C to 900°C) for a predetermined cumulative time (for example, about one minute to 120 minutes).

The heating device 10 includes N (where N is a natural number of 2 or more) heating units 12 and a controller Ctr (control unit). In the example of FIG. 2, the N heating units 12 include eight heating units 12A to 12H. Hereinafter, a case where the heating device 10 includes eight heating units 12A to 12H will be described as an example.

As illustrated in FIG. 2, the heating units 12A to 12H have an annular shape (for example, a circular ring shape) as a whole when all the heating units are combined. An outer diameter obtained when the heating units 12A to 12H are combined is set to be smaller than an inner diameter of the central hole 1a of the laminated iron core 1. Each of the heating units 12A to 12H may have a fan shape when viewed from above.

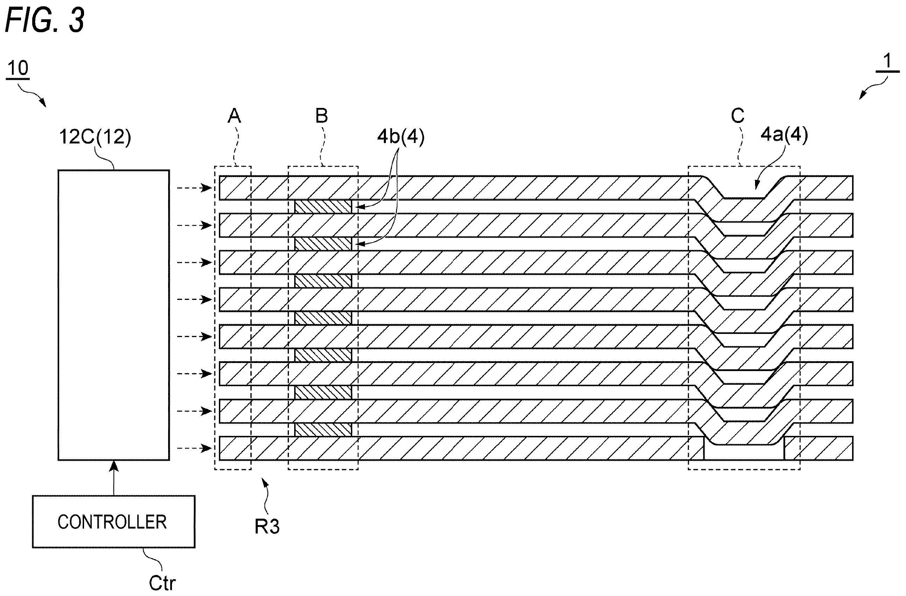

As illustrated in FIGS. 2 and 3, the heating units 12A to 12H are configured to heat an inner peripheral portion of the laminated iron core 1 in a state of being disposed in the central hole 1a of the laminated iron core 1. Specifically, the heating units 12A to 12H are configured to heat facing regions R1 to R8 in the inner peripheral portion of the laminated iron core 1, respectively. That is, the number of regions in the inner peripheral portion of the laminated iron core 1 is the same as the number of heating units 12 included in the heating device 10. One region in the inner peripheral portion of the laminated iron core 1 that faces one heating unit 12 may mainly include one tooth portion 3 or may include a plurality of tooth portions 3. In the example of FIG. 2, each of the regions R1 to R8 mainly includes one tooth portion 3.

The heating units 12A to 12H are not particularly limited as long as the inner peripheral portion of the laminated iron core 1 can be heated to a predetermined temperature (for example, about 700°C to 900°C). The heating units 12A to 12H may each include, for example, a heating element capable of raising the temperature to a predetermined temperature (for example, about 850°C) in a predetermined time (for example, within 0.5 seconds to 300 seconds). The heating element may be, for example, a nichrome resistance heating unit or a carbon heating unit. The heating units 12A to 12H may be configured to heat the inner peripheral portion of the laminated iron core 1 by blowing a gas (for example, nitrogen) heated by the heating element to the inner peripheral portion of the laminated iron core 1.

The controller Ctr is configured to generate instruction signals for operating the heating units 12A to 12H, for example, based on a program recorded on a recording medium (not shown) or an operation input from an operator. The controller Ctr is configured to transmit the generated instruction signal to the heating units 12A to 12H.

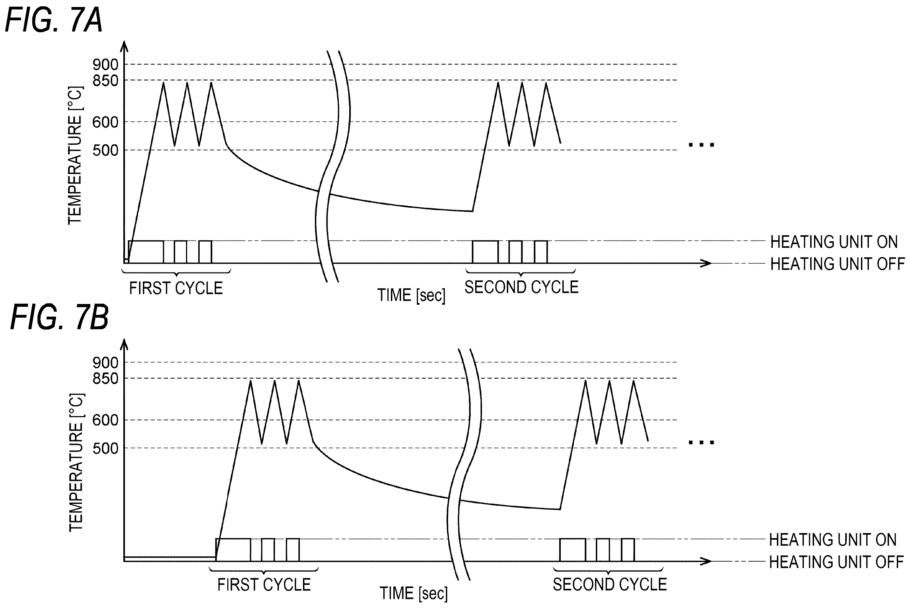

The controller Ctr is configured to operate the heating units 12A to 12H at different timings in a state where the heating units 12A to 12H are arranged in the central hole 1a of the laminated iron core 1 so as to be aligned in the circumferential direction of the laminated iron core 1. Accordingly, the regions R1 to R8 are individually heated at different timings by the heating units 12A to 12H, respectively. For example, after one heating unit among the heating units 12A to 12H operates as illustrated in FIG. 7A, another heating unit different from the one heating unit among the heating units 12A to 12H may operate as illustrated in FIG. 7B.

The timing for switching between the heating units 12A to 12H is not particularly limited, but when the heating device 10 includes four or more heating units 12, the controller Ctr may operate one heating unit 12 and then operate another heating unit 12 that is not adjacent to the one heating unit 12. Alternatively, after operating one heating unit 12, the controller Ctr may operate another heating unit 12 that faces the one heating unit 12 with the central axis Ax interposed therebetween.

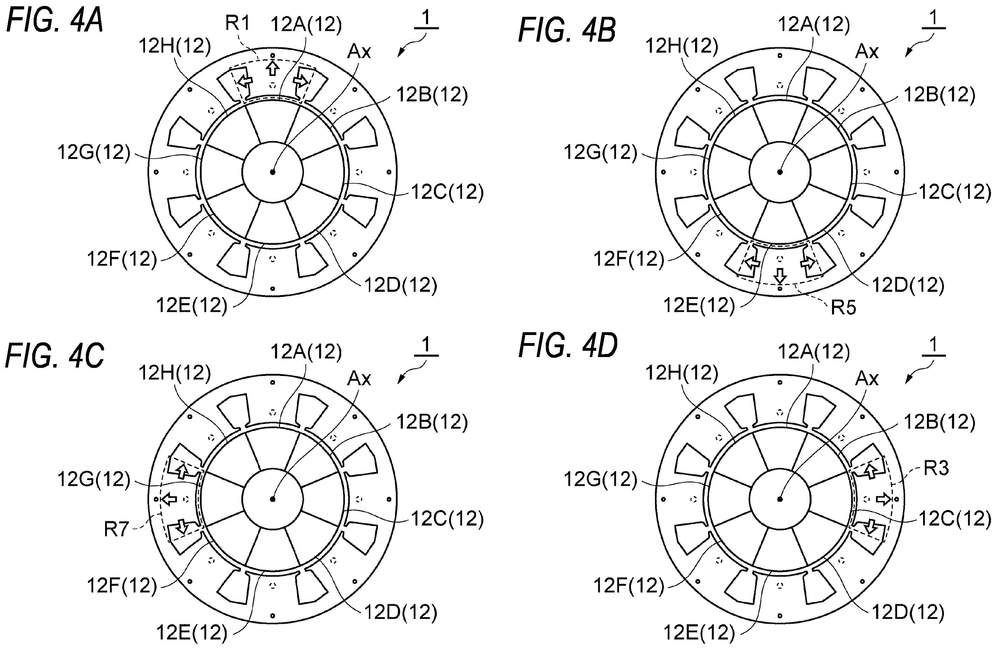

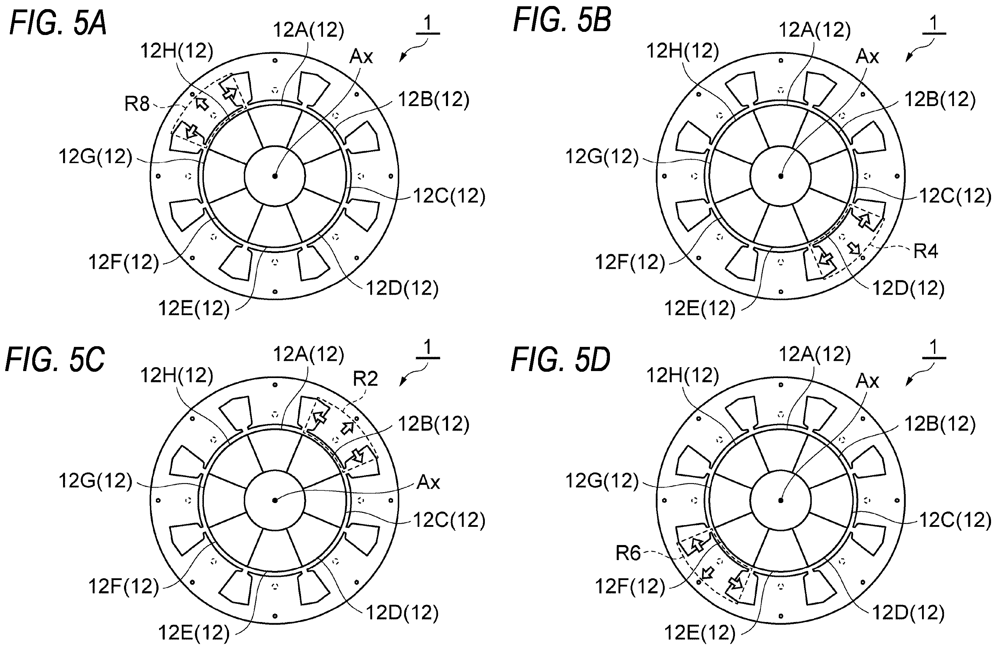

An example of the timing for switching the heating units 12A to 12H will be described with reference to FIGS. 4A to 4D and 5A to 5D. First, as illustrated in FIG. 4A, the controller Ctr operates the heating unit 12A and stops the other heating units 12B to 12H. As a result, the region R1 of the inner peripheral portion of the laminated iron core 1 is heated, but the other regions R2 to R8 are not heated. Therefore, the thermal expansion in the circumferential direction and a radially outward direction in the tooth portion 3 included in the region R1 is absorbed by the other regions R2 to R8.

After a predetermined time (for example, 0.5 seconds to 50 seconds) has elapsed from the start of the operation of the heating unit 12A, the controller Ctr operates the heating unit 12E and stops the other heating units 12A to 12D and 12F to 12H as illustrated in FIG. 4B. As a result, the region R5 of the inner peripheral portion of the laminated iron core 1 is heated, but the other regions R1 to R4 and R6 to R8 are not heated. Therefore, the thermal expansion in the circumferential direction and the radially outward direction in the tooth portion 3 included in the region R5 is absorbed by the other regions R1 to R4 and R6 to R8. Further, the region R5 is positioned on the opposite side of the central axis Ax from the region R1 that is heated before the start of heating of the region R5. Therefore, even if heat remains in the region R1, the region R5 is hardly affected by thermal expansion in the region R1.

After a predetermined time (for example, 0.5 seconds to 50 seconds) has elapsed from the start of the operation of the heating unit 12E, the controller Ctr operates the heating unit 12G and stops the other heating units 12A to 12F and 12H as illustrated in FIG. 4C. As a result, the region R7 of the inner peripheral portion of the laminated iron core 1 is heated, but the other regions R1 to R6 and R8 are not heated. Therefore, the thermal expansion in the circumferential direction and the radially outward direction in the tooth portion 3 included in the region R7 is absorbed by the other regions R1 to R6 and R8. Further, since the region R7 is located at a position separated by 45° around the central axis Ax away from the region R5 that is heated before the start of heating of the region R7. Therefore, even if heat remains in the region R5, the region R7 is hardly affected by thermal expansion in the region R5.

After a predetermined time (for example, 0.5 seconds to 50 seconds) has elapsed from the start of the operation of the heating unit 12G, the controller Ctr operates the heating unit 12C and stops the other heating units 12A, 12B, and 12D to 12H as illustrated in FIG. 4D. As a result, the region R3 of the inner peripheral portion of the laminated iron core 1 is heated, but the other regions R1, R2, and R4 to R8 are not heated. Therefore, the thermal expansion in the circumferential direction and the radially outward direction in the tooth portion 3 included in the region R3 is absorbed by the other regions R1, R2, and R4 to R8. Further, the region R3 is positioned on the opposite side of the central axis Ax from the region R7 that is heated before the start of heating of the region R3. Therefore, even if heat remains in the region R7, the region R3 is hardly affected by thermal expansion in the region R7.

After a predetermined time (for example, 0.5 seconds to 50 seconds) has elapsed from the start of the operation of the heating unit 12C, the controller Ctr operates the heating unit 12H and stops the other heating units 12A to 12G as illustrated in FIG. 5A. As a result, the region R8 of the inner peripheral portion of the laminated iron core 1 is heated, but the other regions R1 to R7 are not heated. Therefore, the thermal expansion in the circumferential direction and the radially outward direction in the tooth portion 3 included in the region R8 is absorbed by the other regions R1 to R7. Further, the region R8 is located at a position separated by 135° around the central axis Ax away from the region R3 that is heated before the start of heating of the region R8. Therefore, even if heat remains in the region R3, the region R8 is hardly affected by thermal expansion in the region R3.

After a predetermined time (for example, 0.5 seconds to 50 seconds) has elapsed from the start of the operation of the heating unit 12H, the controller Ctr operates the heating unit 12D and stops the other heating units 12A to 12C and 12E to 12H as illustrated in FIG. 5B. As a result, the region R4 of the inner peripheral portion of the laminated iron core 1 is heated, but the other regions R1 to R3 and R5 to R8 are not heated. Therefore, the thermal expansion in the circumferential direction and the radially outward direction in the tooth portion 3 included in the region R4 is absorbed by the other regions R1 to R3 and R5 to R8. Further, the region R4 is positioned on the opposite side of the central axis Ax from the region R8 that is heated before the start of heating of the region R4. Therefore, even if heat remains in the region R8, the region R4 is hardly affected by thermal expansion in the region R8.

After a predetermined time (for example, 0.5 seconds to 50 seconds) has elapsed from the start of the operation of the heating unit 12D, the controller Ctr operates the heating unit 12B and stops the other heating units 12A and 12C to 12H as illustrated in FIG. 5C. As a result, the region R2 of the inner peripheral portion of the laminated iron core 1 is heated, but the other regions R1 and R3 to R8 are not heated. Therefore, the thermal expansion in the circumferential direction and the radially outward direction in the tooth portion 3 included in the region R2 is absorbed by the other regions R1 and R3 to R8. Further, the region R2 is located at a position separated by 45° around the central axis Ax away from the region R4 that is heated before the start of heating of the region R2. Therefore, even if heat remains in the region R4, the region R2 is hardly affected by thermal expansion in the region R4.

After a predetermined time (for example, 0.5 seconds to 50 seconds) has elapsed from the start of the operation of the heating unit 12B, the controller Ctr operates the heating unit 12F and stops the other heating units 12A to 12E, 12G, and 12H as illustrated in FIG. 5D. As a result, the region R6 of the inner peripheral portion of the laminated iron core 1 is heated, but the other regions R1 to R5, R7, and R8 are not heated. Therefore, the thermal expansion in the circumferential direction and the radially outward direction in the tooth portion 3 included in the region R6 is absorbed by the other regions R1 to R5, R7, and R8. Further, the region R6 is positioned on the opposite side of the central axis Ax from the region R2 that is heated before the start of heating of the region R6. Therefore, even if heat remains in the region R2, the region R6 is hardly affected by thermal expansion in the region R2.

The controller Ctr may switch the operations of the heating units 12A to 12H one by one at intervals of a predetermined time (for example, 0.5 seconds to 50 seconds). Alternatively, the controller Ctr may switch the operations of the heating units 12A to 12H at least one at a time at intervals of a predetermined time (for example, 0.5 seconds to 50 seconds). Here, switching the operation of the heating units 12A to 12H at least one at a time means that after operating at least one of the heating units 12A to 12H (for example, the heating units 12A to 12C), operation of at least one of the heating units 12A to 12H that has not been operated (for example, the heating units 12D and 12E) is repeated, and all the heating units 12A to 12H are operated once at a time while switching the heating units 12A to 12H. For example, the controller Ctr may operate one heating unit 12G after operating the two heating units 12A and 12E. For example, the controller Ctr may operate two heating units 12C and 12G after operating two heating units 12A and 12E.

The controller Ctr may control the heating units 12A to 12H so that the heating units 12A to 12H is repeatedly operated at different timings a plurality of times. That is, the operation of each of the heating units 12A to 12H at different timings is considered as one cycle, and the controller Ctr may be configured to execute the operation of the heating units 12A to 12H for X cycles (where X is a natural number of 1 or more). For example, as illustrated in FIGS. 7A and 7B, after the first (first cycle) operation of one heating unit among the heating units 12A to 12H, the second (second cycle) and subsequent operations of the one heating unit may be performed. The number of repetitions (the number of cycles X) may be set according to the magnitude of the distortion remaining in the inner peripheral portion of the laminated iron core 1. For example, when the size of the laminated iron core 1 is relatively large or when the shape of the inner peripheral portion of the laminated iron core 1 is complicated, the distortion remaining in the inner peripheral portion of the laminated iron core 1 tends to increase. Therefore, the number of repetitions (the number of cycles X) may be set based on the size of the laminated iron core 1 and the shape of the inner peripheral portion of the laminated iron core 1. The greater the number of repetitions (the number of cycles X), the longer the cumulative time during which the inner peripheral portion of the laminated iron core 1 is heated, and thus the greater the tendency for the removal of distortion.

The controller Ctr may be configured to intermittently heat (so-called pulse heat) a region of the inner peripheral portion of the laminated iron core 1 that faces one heating unit 12 by intermittently turning the one heating unit 12 on and off repeatedly during the operation of the one heating unit 12. For example, as illustrated in FIGS. 3, 6, 7A and 7B, the controller Ctr may turn off the one heating unit 12 when the temperature of a region A (a region R3 in the example of FIG. 3) of the inner peripheral portion of the laminated iron core 1 that faces the one heating unit 12 rises to a predetermined temperature (for example, about 850°C). As illustrated in FIGS. 7A and 7B, the controller Ctr may turn on the one heating unit 12 when the temperature of the region A drops to a predetermined temperature (for example, about 500°C). Thus, the laminated iron core 1 is heated in an annealing temperature range of 600°C to 900°C.

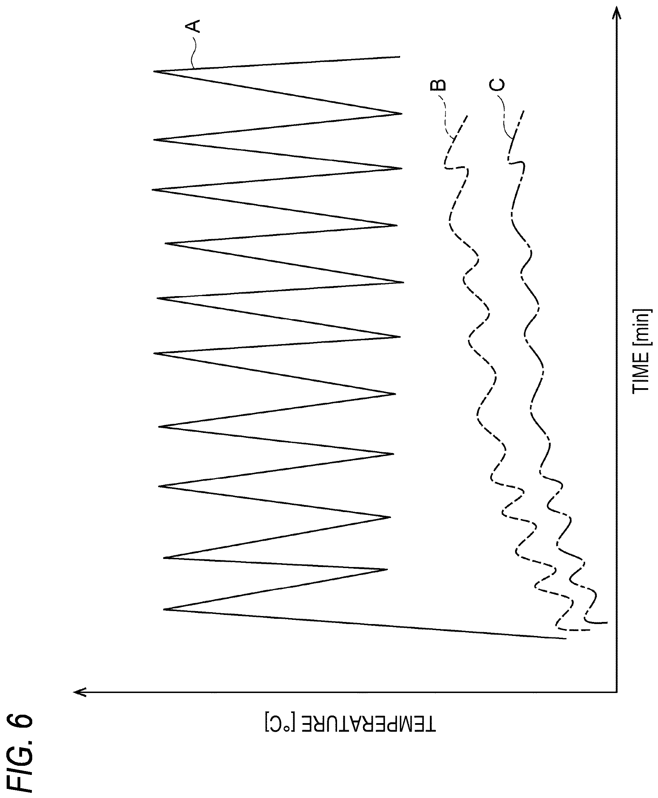

When the inner peripheral portion of the laminated iron core 1 is intermittently heated by repeating on and off in this manner, heat is mainly transferred to the vicinity of the surface of the laminated iron core 1 and is hardly transferred to a deep portion of the laminated iron core. Specifically, as illustrated in FIGS. 3 and 6, regions B and C of the laminated iron core 1 where the joint portions 4 (the caulking 4a and the adhesive 4b) are present are less likely to be heated by the heat from the heating unit 12 (the heating unit 12C in the example of FIG. 3). As a result, it is possible to effectively heat the vicinity of the inner peripheral portion of the laminated iron core 1 where distortion is likely to remain due to press working, and also to reduce the effect on a joining state at the joint portions 4.

The time during which the one heating unit 12 is turned on may be about 0.01 seconds to 30 seconds, about 0.01 seconds to 20 seconds, or about 0.05 seconds to 10 seconds. The time during which the one heating unit 12 is turned off may be about 0.01 seconds to 30 seconds, about 0.01 seconds to 20 seconds, or about 0.05 seconds to 10 seconds. In this manner, the vicinity of the surface of the inner peripheral portion of the laminated iron core 1 can be more effectively heated by intermittent heating in which heating and cooling are repeated in a short period of time.

### Effects

According to the above example, the regions R1 to R8 of the inner peripheral portion of the laminated iron core 1 are heated by the heating units 12A to 12H at different timings, respectively. In other words, there are a heated region and an unheated region in the inner peripheral portion of the laminated iron core 1. Therefore, even if the heated region thermally expands, the thermal expansion is absorbed by the unheated region. That is, an escape place for deformation due to thermal expansion in the inner peripheral portion of the laminated iron core 1 is secured in the unheated region. Therefore, it is possible to reduce deformation occurring in the inner peripheral portion of the laminated iron core 1 when the laminated iron core 1 is heated.

According to the above example, after operating one heating unit 12, the controller Ctr can operate another heating unit 12 that is not adjacent to the one heating unit 12. In this case, the influence of thermal expansion is unlikely to occur between one region heated by the one heating unit 12 and another region heated by the other heating unit 12. Therefore, it is possible to further reduce deformation occurring in the inner peripheral portion of the laminated iron core 1 when the laminated iron core 1 is heated.

According to the above example, after operating one heating unit 12, the controller Ctr may operate another heating unit 12 that faces the one heating unit 12 with the central axis Ax interposed therebetween. In this case, after one region is heated by the one heating unit 12, another region as far as possible from the one region is heated by the other heating unit 12. Therefore, the influence of thermal expansion is less likely to occur between the one region and the other region. Therefore, it is possible to further reduce deformation occurring in the inner peripheral portion of the laminated iron core 1 when the laminated iron core 1 is heated.

According to the above example, the heating units 12A to 12H can be switched one by one at intervals of a predetermined time (for example, 1 second to 10 seconds). In this case, since the heating of the inner peripheral portion of the laminated iron core 1 by one heating unit 12 is performed in a relatively short time, it is possible to prevent the inner peripheral portion of the laminated iron core 1 from being excessively heated.

According to the above example, the operation of the heating units 12A to 12H can be executed for X cycles. In this case, the cumulative time during which the inner peripheral portion of the laminated iron core 1 is heated increases in proportion to the number of repetitions. Therefore, by setting the number of repetitions according to the magnitude of the distortion remaining in the inner peripheral portion of the laminated iron core 1, the remaining distortion can be more effectively removed.

### Modifications

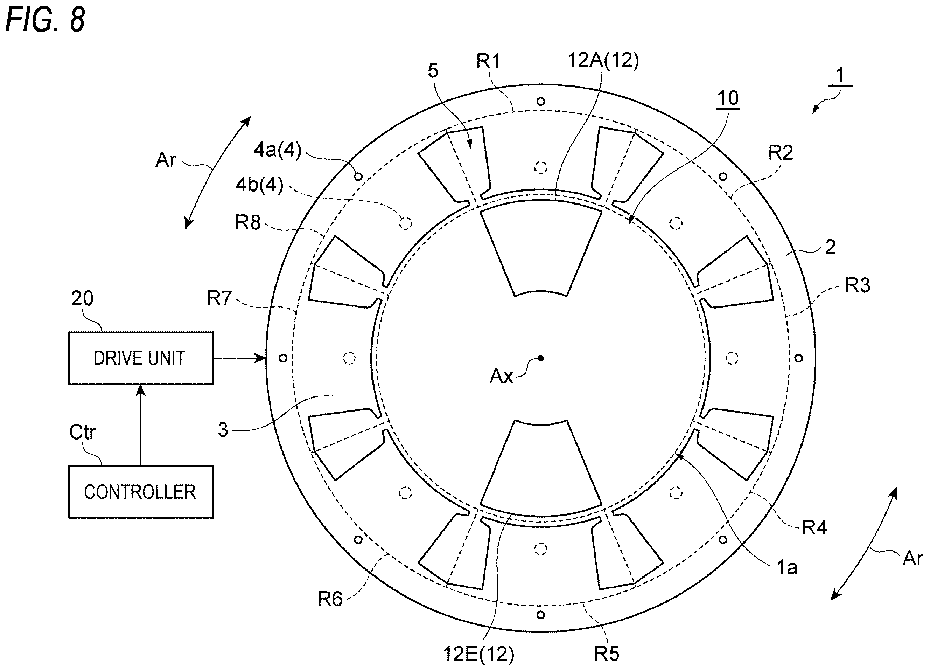

The disclosure in this description should be considered to be illustrative and not restrictive in all respects. Various omissions, substitutions, or modifications may be made to the above examples without departing from the scope of the claims and the gist thereof.
(1) In the aspect illustrated in FIG. 2, the number of heating units 12 is not particularly limited as long as it is two or more, and may be the same number as the number of tooth portions 3 included in the laminated iron core 1, or may be a divisor of the number of tooth portions 3 included in the laminated iron core 1.
(2) The heating device 10 may include M (where M is a natural number of 1 or more) heating unit 12. As illustrated in FIG. 8, the number of M heating units 12 may be less than the number of regions R1 to R8 of the laminated iron core 1. In the example of FIG. 8, the heating device 10 includes two heating units 12A and 12E.

As illustrated in FIG. 8, the heating device 10 may further include a drive unit 20. The drive unit 20 is configured to rotate the laminated iron core 1 around the central axis Ax thereof based on an instruction signal from the controller Ctr (see arrows Ar in FIG. 8). The drive unit 20 may include, for example, a mounting member on which the laminated iron core 1 is mounted, and an actuator (for example, a motor) that rotationally drives the mounting member.

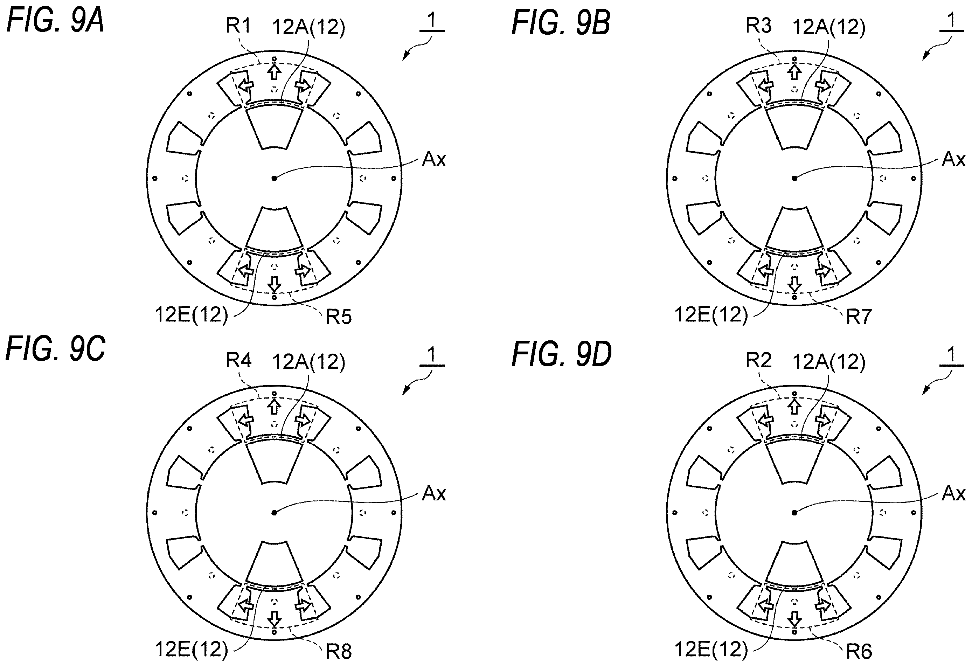

An example of the heating timing of the laminated iron core 1 when the laminated iron core 1 is heated using the heating device 10 according to the example of FIG. 8 will be described with reference to FIGS. 9A to 9D. First, as illustrated in FIG. 9A, the controller Ctr operates the heating units 12A and 12E. As a result, the regions R1 and R5 of the inner peripheral portion of the laminated iron core 1 are heated, but the other regions R2 to R4 and R6 to R8 are not heated. Therefore, the thermal expansion in the circumferential direction and the radially outward direction in the tooth portions 3 included in the regions R1 and R5 is absorbed by the other regions R2 to R4 and R6 to R8.

After a predetermined time (for example, 0.5 seconds to 50 seconds) has elapsed from the start of the operation of the heating units 12A and 12E, as illustrated in FIG. 9B, the controller Ctr operates the drive unit 20 to rotate the laminated iron core 1 about the central axis Ax by approximately 90°, and then operates the heating units 12A and 12E. As a result, the regions R3 and R7 of the inner peripheral portion of the laminated iron core 1 are heated, but the other regions R1, R2, R4, R5, R6, and R8 are not heated. Therefore, the thermal expansion in the circumferential direction and the radially outward direction in the tooth portions 3 included in the regions R3 and R7 is absorbed by the other regions R1, R2, R4, R5, R6, and R8. Further, the regions R3 and R7 are not adjacent to the regions R1 and R5 which are heated before the start of heating of the regions R3 and R7 in the circumferential direction of the laminated iron core 1. Therefore, even if heat remains in the regions R1 and R5, the regions R3 and R7 are hardly affected by thermal expansion in the regions R1 and R5.

After a predetermined time (for example, 0.5 seconds to 50 seconds) has elapsed from the start of the operation of the heating units 12A and 12E, as illustrated in FIG. 9C, the controller Ctr operates the drive unit 20 to rotate the laminated iron core 1 about the central axis Ax by approximately 45°, and then operates the heating units 12A and 12E. As a result, the regions R4 and R8 of the inner peripheral portion of the laminated iron core 1 are heated, but the other regions R1 to R3 and R5 to R7 are not heated. Therefore, the thermal expansion in the circumferential direction and the radially outward direction in the tooth portions 3 included in the regions R4 and R8 is absorbed by the other regions R1 to R3 and R5 to R7.

After a predetermined time (for example, 0.5 seconds to 50 seconds) has elapsed from the start of the operation of the heating units 12A and 12E, as illustrated in FIG. 9D, the controller Ctr operates the drive unit 20 to rotate the laminated iron core 1 about the central axis Ax by approximately 90°, and then operates the heating units 12A and 12E. As a result, the regions R2 and R6 of the inner peripheral portion of the laminated iron core 1 are heated, but the other regions R1, R3, R4, R5, R7, and R8 are not heated. Therefore, the thermal expansion in the circumferential direction and the radially outward direction in the tooth portions 3 included in the regions R2 and R6 is absorbed by the other regions R1, R3, R4, R5, R7, and R8. Further, the regions R2 and R6 are not adjacent to the regions R4 and R8 which are heated before the start of heating of the regions R2 and R6 in the circumferential direction of the laminated iron core 1. Therefore, even if heat remains in the regions R4 and R8, the regions R2 and R6 are hardly affected by thermal expansion in the regions R4 and R8.

As described above, the drive unit 20 preferably rotates the laminated iron core 1 around the central axis Ax thereof, and may also be configured to rotate the M heating units 12 around the central axis Ax of the laminated iron core 1.

According to the aspect illustrated in FIG. 8, first, M regions of the laminated iron core 1 are heated by the M heating units 12, and then, by the rotation of the laminated iron core 1 or the M heating units 12, a region different from the M regions of the laminated iron core 1 is heated by at least one of the M heating units 12. In other words, there are a heated region and an unheated region in the laminated iron core 1 before and after the rotation. Therefore, even if the heated region thermally expands, the thermal expansion is absorbed by the unheated region. That is, an escape place for deformation due to thermal expansion in the laminated iron core 1 is secured in the unheated region. Therefore, it is possible to reduce deformation occurring in the laminated iron core 1 when the laminated iron core 1 is heated.

(3) Regarding the aspect illustrated in FIG. 2 or 8, in a state where the heating units 12 are arranged in the central hole 1a of the laminated iron core 1, at least one heating unit 12 may be positioned in front of the tooth portion 3 or may be positioned in front of the slot 5. Depending on the number of heating units 12 and the number of tooth portion 3, one heating unit 12 may be positioned in front of two or more tooth portions 3 and one or more slots 5, or may be positioned in front of one or more tooth portions 3 and two or more slots 5.

(4) Regarding the aspect illustrated in FIG. 2 or 8, the heating units 12 may be disposed partially or entirely in the space inside the slot 5.

(5) Regarding the aspect illustrated in FIG. 2 or 8, the heating device 10 may further include another heating unit disposed on an outer peripheral side of the laminated iron core 1. The controller Ctr may control the other heating unit to heat an outer peripheral portion of the laminated iron core 1 by the other heating unit.

(6) Regarding the aspect illustrated in FIG. 2 or FIG. 8, as the laminated iron core 1, a so-called outer stator type stator laminated iron core in which the plurality of tooth portions 3 extend inward in the radial direction from the inner edge of the yoke portion 2 is shown as an example. The technology according to the present disclosure is particularly preferably applied to an outer stator type stator laminated iron core, but may also be applied to other types of laminated iron cores 1.

For example, the laminated iron core 1 may be a so-called inner stator type stator laminated iron core in which a plurality of tooth portions extend outward in the radial direction from an outer edge of a yoke portion. In this case, similarly to the aspect illustrated in FIG. 2, the N heating units 12 of the heating device 10 may be arranged so as to entirely surround an outer peripheral portion of the inner stator type stator laminated iron core. That is, an inner diameter obtained when the heating units 12A to 12H are combined may be set to be larger than an outer diameter of the inner stator type stator laminated iron core. Each of the N heating units 12 may face, for example, a tip end portion of a tooth portion of the inner stator type stator laminated iron core. That is, the number of N heating units 12 may be the same as the number of tooth portions of the inner stator type stator laminated iron core. When the inner stator type stator laminated iron core is heated, the controller Ctr may operate the N heating units 12 separately at different timings similarly to the outer stator type stator laminated iron core described above. As a result, the tooth portions of the inner stator type stator laminated iron core are individually heated at different timings. Therefore, it is possible to reduce deformation occurring in the laminated iron core 1 when the laminated iron core 1 is heated. When the inner stator type stator laminated iron core is heated, the controller Ctr may switch the operations of the N heating units 12 illustrated in FIG. 2 or FIG. 8 at least one at a time at intervals of a predetermined time (for example, 0.5 seconds to 50 seconds).

Alternatively, similarly to the aspect illustrated in FIG. 8, the heating device 10 may include M heating units 12, the number of which is less than the number of the regions R1 to R8 of the laminated iron core 1, and the M heating units 12 may be disposed on the outer peripheral portion of the inner stator type stator laminated iron core. In this case, as in the aspect illustrated in FIG. 8, the laminated iron core 1 or the M heating units 12 may be rotated around the central axis Ax of the laminated iron core 1. Therefore, there are a heated region and an unheated region in the laminated iron core 1 before and after the rotation. Therefore, it is possible to reduce deformation occurring in the laminated iron core 1 when the laminated iron core 1 is heated.

For example, the laminated iron core 1 may be a split laminated iron core formed by combining a plurality of core pieces, or may be a non-split laminated iron core. An example of the non-split laminated iron core may be a core in which a plurality of teeth are provided on a single yoke, and a plurality of folded punched members are laminated together such that the yoke is bent between the teeth to form a ring shape as a whole. In another example of the non-split laminated iron core, a plurality of punched members having a circular ring shape may be laminated together.

For example, the laminated iron core 1 may be a rotor laminated iron core. In this case, the number of heating units 12 is not particularly limited either as long as it is two or more.

### Other Examples

Example 1. An example of a method for manufacturing a laminated iron core includes: arranging N (where N is a natural number of two or more) heating units in the laminated iron core such that the N heating units are aligned in a circumferential direction of the laminated iron core; and heating N regions of the laminated iron core that face the N heating units with the N heating units. Heating with the N heating units includes switching operation of the N heating units from one to less than N at a time. In this case, the N regions of the laminated iron core are heated at different timings by one or less than N heating units at a time. In other words, there are a heated region and an unheated region in the laminated iron core. Therefore, even if the heated region thermally expands, the thermal expansion is absorbed by the unheated region. That is, an escape place for deformation due to thermal expansion in the laminated iron core is secured in the unheated region. Therefore, it is possible to reduce deformation occurring in the laminated iron core when the laminated iron core is heated.

Example 2. In the method according to Example 1, when one heating unit of the N heating units heats one region corresponding to the one heating unit of the N regions, the one region may be intermittently heated by intermittently turning the one heating unit on and off repeatedly. In this case, heat from the heating unit is mainly transferred to the vicinity of a surface of the laminated iron core and is hardly transferred to a deep portion of the laminated iron core. Therefore, the vicinity of the surface (for example, an inner peripheral surface or an outer peripheral surface) of the laminated iron core where distortion is likely to remain due to the press working is effectively heated. In addition, the heat from the heating unit is less likely to be transferred to the joint portions (for example, the caulking, the adhesive, and the like) that join the plurality of punched members forming the laminated iron core together. Therefore, it is possible to reduce the effect on the joining state at the joint portions.

Example 3. In the method according to Example 2, when one heating unit of the N heating units heats one region corresponding to the one heating unit of the N regions, the one region may be intermittently heated by intermittently turning the one heating unit on for 0.01 seconds to 30 seconds and off for 0.01 seconds to 30 seconds repeatedly. In this case, the vicinity of the surface of the laminated iron core can be more effectively heated.

Example 4. In the method according to any one of Example 1 to Example 3, the N heating units may include four or more heating units, and heating with the N heating units may include operating one heating unit of the N heating units and then operating another heating unit of the N heating units that is not adjacent to the one heating unit. In this case, after one region of the N regions of the laminated iron core is heated by one heating unit, another region that is not adjacent to the one region of the N regions is heated by another heating unit. Therefore, the influence of thermal expansion is less likely to occur between the one region and the other region. Therefore, it is possible to further reduce deformation occurring in the laminated iron core when the laminated iron core is heated.

Example 5. In the method according to Example 4, heating with the N heating units may include operating one heating unit of the N heating units and then operating another heating unit of the N heating units that faces the one heating unit across a central axis of the laminated iron core. In this case, after the one region of the N regions of the laminated iron core is heated by the one heating unit, another region as far as possible from the one region is heated. Therefore, the influence of thermal expansion is less likely to occur between the one region and the other region. Therefore, it is possible to further reduce deformation occurring in the laminated iron core when the laminated iron core is heated.

Example 6. In the method according to any one of Example 1 to Example 5, heating with the N heating units may include switching the N heating units one by one at intervals of 0.5 seconds to 50 seconds. In this case, since the heating of the laminated iron core by one heating unit is performed in a relatively short time, it is possible to prevent the laminated iron core from being excessively heated.

Example 7. In the method according to any one of Example 1 to Example 6, heating with the N heating units may include repeatedly operating the N heating units at different timings a plurality of times. In this case, the cumulative time during which the laminated iron core is heated increases in proportion to the number of repetitions. Therefore, by setting the number of repetitions according to the magnitude of the distortion remaining in the laminated iron core, the remaining distortion can be more effectively removed.

Example 8. Another example of a method for manufacturing a laminated iron core includes: arranging M (where M is a natural number of one or more) heating units to face an inner peripheral portion or an outer peripheral portion of a laminated iron core; heating M regions of the laminated iron core that face the M heating units with the M heating units; and rotating the laminated iron core or the M heating units around a central axis of the laminated iron core, and heating a region of the laminated iron core other than the M regions with at least one of the M heating units. In this case, first, M regions of the laminated iron core are heated by the M heating units, and then, by the rotation of the laminated iron core or the M heating units, a region different from the M regions of the laminated iron core is heated by at least one of the M heating units. In other words, there are a heated region and an unheated region in the laminated iron core before and after the rotation. Therefore, even if the heated region thermally expands, the thermal expansion is absorbed by the unheated region. That is, an escape place for deformation due to thermal expansion in the laminated iron core is secured in the unheated region. Therefore, it is possible to reduce deformation occurring in the laminated iron core when the laminated iron core is heated.

Example 9. In the method according to Example 8, when one heating unit of the M heating units heats one region corresponding to the one heating unit of the laminated iron core, the one region may be intermittently heated by intermittently turning the one heating unit on and off repeatedly. In this case, the same operation and effects as those of the method according to Example 2 can be obtained.

Example 10. In the method according to Example 9, when one heating unit of the M heating units heats one region corresponding to the one heating unit of the laminated iron core, the one region may be intermittently heated by intermittently turning the one heating unit on for 0.01 seconds to 30 seconds and off for 0.05 seconds to 10 seconds repeatedly. In this case, the same operation and effects as those of the method according to Example 3 can be obtained.

Example 11. In the method according to any one of Example 8 to Example 10, heating with the M heating units or heating with at least one of the M heating units may include switching the M heating units one by one at intervals of 0.5 seconds to 50 seconds. In this case, the same operation and effects as those of the method according to Example 6 can be obtained.

Example 12. In the method according to any one of Example 8 to Example 11, heating with the M heating units or heating with at least one of the M heating units may include repeatedly operating the M heating units at different timings a plurality of times.

Example 13. An example of a heating device includes: N (where N is a natural number of two or more) heating units; and a control unit. The control unit is configured to, in a state where the N heating units are arranged in a laminated iron core in a manner of aligning in a circumferential direction of the laminated iron core, perform a process of heating N regions of the laminated iron core that face the N heating units by switching operation of the N heating units from one to less than N at a time. In this case, the same operation and effects as those of the method according to Example 1 can be obtained.

Example 14. Another example of a heating device includes: M (where M is a natural number of one or more) heating units; a drive unit configured to rotate the M heating units or a laminated iron core around a central axis of the laminated iron core; and a control unit. The control unit is configured to execute a process of heating M regions of the laminated iron core that face the M heating units by operating the M heating units in a state where the M heating units are arranged to face an inner peripheral portion or an outer peripheral portion of the laminated iron core, a process of rotating the laminated iron core or the M heating units around the central axis by controlling the drive unit, and a process of heating a region of the laminated iron core other than the M regions by operating at least one of the M heating units. In this case, the same operation and effects as those of the method according to Example 8 can be obtained.

### REFERENCE SIGNS LIST

1: laminated iron core
1a: central hole
10: heating device
12: heating unit
20: drive unit
Ax: central axis
Ctr: controller (control unit)
R1 to R8: region

## Claims

1. A method for manufacturing a laminated iron core, the method comprising:
arranging N heating units in the laminated iron core such that the N heating units are aligned in a circumferential direction of the laminated iron core, where N is a natural number of two or more; and
heating N regions of the laminated iron core that face the N heating units with the N heating units,
wherein the heating includes switching operation of the N heating units from one to less than N at a time.

2. The method according to claim 1,
wherein when one heating unit of the N heating units heats one region corresponding to the one heating unit of the N regions, the one region is intermittently heated by intermittently turning the one heating unit on and off repeatedly.

3. The method according to claim 2,
wherein when one heating unit of the N heating units heats one region corresponding to the one heating unit of the N regions, the one region is intermittently heated by intermittently turning the one heating unit on for 0.01 seconds to 30 seconds and off for 0.01 seconds to 30 seconds repeatedly.

4. The method according to claim 1,
wherein the N heating units include four or more heating units, and
wherein the heating includes operating one heating unit of the N heating units and then operating another heating unit of the N heating units that is not adjacent to the one heating unit.

5. The method according to claim 4,
wherein the heating includes operating one heating unit of the N heating units and then operating another heating unit of the N heating units that faces the one heating unit across a central axis of the laminated iron core.

6. The method according to claim 1,
wherein the heating includes switching the N heating units one by one at intervals of 0.5 seconds to 50 seconds.

7. The method according to any one of claims 1 to 6,
wherein the heating includes repeatedly operating the N heating units at different timings a plurality of times.

8. A method for manufacturing a laminated iron core, the method comprising:
arranging M heating units to face an inner peripheral portion or an outer peripheral portion of a laminated iron core, where M is a natural number of one or more;
heating M regions of the laminated iron core that face the M heating units with the M heating units; and
rotating the laminated iron core or the M heating units around a central axis of the laminated iron core, and heating a region of the laminated iron core other than the M regions with at least one of the M heating units.

9. A heating device comprising:
N heating units, where N is a natural number of two or more; and
a control unit,
wherein the control unit is configured to, in a state where the N heating units are arranged in a laminated iron core in a manner of aligning in a circumferential direction of the laminated iron core, perform a process of heating N regions of the laminated iron core that face the N heating units by switching operation of the N heating units from one to less than N at a time.

10. A heating device comprising:
M heating units, where M is a natural number of one or more;
a drive unit configured to rotate the M heating units or a laminated iron core around a central axis of the laminated iron core; and
a control unit,
wherein the control unit is configured to execute
heating M regions of the laminated iron core that face the M heating units by operating the M heating units in a state where the M heating units are arranged to face an inner peripheral portion or an outer peripheral portion of the laminated iron core,
rotating the laminated iron core or the M heating units around the central axis by controlling the drive unit, and
heating a region of the laminated iron core other than the M regions by operating at least one of the M heating units.
